# EUROPÄISCHE PATENTANMELDUNG

(11) **EP 3 816 028 A1**
(43) Veröffentlichungstag der Anmeldung: **05.05.2021**
(21) Anmeldenummer: 20204141.4
(22) Anmeldetag: 27.10.2020
(51) Int. Cl.: B62J 99/00, B65D 85/68, A45C 5/14, B60B 33/00

(54) **FAHRRADTRANSPORTBEHÄLTER SOWIE ROLLELEMENT FÜR EINEN FAHRRADTRANSPORTBEHÄLTER**

(30) Priorität: 04.11.2019 DE 202019106107 U
(71) Anmelder: Canyon Bicycles GmbH, 56073 Koblenz (DE)
(72) Erfinder: Caratiola, Nicolas, 56073 Koblenz (DE)
(74) Vertreter: dompatent von Kreisler Selting Werner - Partnerschaft von Patent- und Rechtsanwälten mbB

(57) **Zusammenfassung**

Fahrradtransportbehälter weisen einen üblicherweise quaderförmigen Außenbehälter auf. Innerhalb des Außenbehälters sind Halte- und/oder Aufnahmeelemente vorgesehen, die zur Aufnahme von Fahrradelementen wie Fahrradrahmen, Laufrädern und dergleichen dienen. Um den Transport eines Fahrradtransportbehälters zu vereinfachen, sind erfindungsgemäß an einem Bodenelement des Außenbehälters Rollelemente (10, 34, 50) angeordnet.

## Beschreibung

Die Erfindung betrifft einen Fahrradtransportbehälter sowie ein Rollelement für einen Fahrradtransportbehälter.

Fahrradtransportbehälter dienen zum Transport und insbesondere zum Versand von Fahrrädern. Hierzu weisen die Fahrradtransportbehälter einen üblicherweise quaderförmigen Außenbehälter auf, in dem das gegebenenfalls teilweise demontierte Fahrrad zum Transport angeordnet ist. Um ein Beschädigen des Fahrrads oder einzelner Bauteile des Fahrrads während des Transports zu vermeiden, sind innerhalb des Außenbehälters Halte- und/oder Aufnahmeelemente für Fahrradelemente wie den Fahrradrahmen, die Laufräder, den Lenker und/oder andere Fahrradbauteile vorgesehen. Der Transport eines derartigen Fahrradtransportbehälters für Privatpersonen, beispielsweise auf Reisen, ist aufgrund des Gewichts und der Abmessungen schwierig.

Aufgabe der Erfindung ist es, einen einfacher zu transportierenden Fahrradtransportbehälter zu schaffen.

Die Lösung der Aufgabe erfolgt erfindungsgemäß durch einen Fahrradtransportbehälter gemäß Anspruch 1 bzw. ein Rollelement für einen Fahrradtransportbehälter gemäß Anspruch 15.

Der erfindungsgemäße Fahrradtransportbehälter weist einen insbesondere quaderförmigen Außenbehälter auf. Dieser weist üblicherweise neben vier Seitenelementen ein Bodenelement und ein Deckelelement auf. Innerhalb des Außenbehälters sind Halte- und/oder Aufnahmeelemente für Fahrradelemente wie den Fahrradrahmen, die Laufräder und dergleichen vorgesehen. Erfindungsgemäß ist an einem Bodenelement des Außenbehälters ein Rollelement angeordnet. Das Rollelement weist eine Rolle oder ein Rad auf, wobei vorzugsweise mindestens zwei und insbesondere mindestens vier derartige Rollelemente an dem Bodenelement des Fahrradtransportbehälters angeordnet sind. Bereits beim Vorsehen von einem Rollelement mit einer entsprechend breiten Rolle ist es möglich, den Fahrradtransportbehälter an einer Seite anzuheben und sodann mit Hilfe des entsprechenden Rollelements leichter transportieren zu können. Bevorzugt ist das Vorsehen von mindestens zwei Rollelementen, die an einer Seite des Bodenelements angeordnet sind, so dass wiederum durch Anheben an der gegenüberliegenden Seite ein einfacher Transport des Fahrradtransportbehälters möglich ist. Besonders bevorzugt ist das Vorsehen von vier Rollelementen, wobei jeweils ein Rollelement im Bereich einer Ecke des Bodenelements angeordnet ist, so dass der Fahrradtransportbehälter auf einfache Weise geschoben oder gezogen werden kann. Die Rollen sind hierbei vorzugsweise derart ausgebildet, dass sie um eine in montiertem Zustand insbesondere vertikal verlaufende Achse schwenkbar sind.

Vorzugsweise weist das Bodenelement eine Öffnung zur Aufnahme jeweils eines Rollelements auf, wobei beim Vorsehen mehrerer Rollelemente vorzugsweise je Rollelement eine Öffnung vorgesehen ist. Bei einem Fahrradtransportbehälter aus Karton ist es bevorzugt, dass die entsprechenden Öffnungen durch eine Perforation und/oder Markierung definiert sind, so dass es für einen Benutzer auf einfache Weise möglich ist, die entsprechenden Öffnungen durch Ausschneiden mit Hilfe eines Teppichmessers oder dergleichen herzustellen. Insbesondere bei einem Bodenelement aus mehreren Lagen Karton ist es möglich, dass die inneren Lagen bereits vorgestanzt sind und an der äußeren Lage eine Markierung, insbesondere eine Linie vorgesehen ist, entlang der die äußerste Lage ausgeschnitten werden muss.

Nachfolgend wird die Erfindung anhand eines Rollelements näher erläutert, wobei je Fahrradtransportbehälter vorzugsweise zwei, insbesondere vier derartige Rollelemente am Bodenelement angeordnet sind.

Das Rollelement weist in bevorzugter Ausführungsform ein Verbindungselement auf. Dieses ist vorzugsweise derart ausgebildet, dass es das Bodenelement teilweise hintergreift. Ein Teil des Verbindungselements liegt in montiertem Zustand somit an einer Innenseite des Bodenelements an. Bevorzugt ist es hierbei insbesondere, dass das Verbindungsteil mindestens ein, insbesondere zwei schwenkbare Halteelemente aufweist. Zur Montage erfolgt ein derartiges Verschwenken des mindestens einen Halteelements, dass dieses an der Innenseite des Bodenelements anliegt bzw. das Bodenelement hintergreift. Hierdurch kann eine gute Befestigung bzw. gute Verbindung zwischen dem Verbindungsteil und dem Bodenelement des Fahrradtransportbehälters realisiert werden.

Des Weiteren ist es bevorzugt, dass das Verbindungsteil ein insbesondere rahmenförmiges Lageteil aufweist. Das Lageteil ist im Wesentlichen in der Öffnung in dem Bodenelement angeordnet. Das Lageteil weist somit in bevorzugter Ausführungsform eine Höhe bzw. eine in montiertem Zustand vertikale Ausdehnung auf, die im Wesentlichen der Dicke des Bodenelements entspricht. Insbesondere kleidet das Lageelement in montiertem Zustand die Öffnung in dem Bodenelement aus. Hierbei kann die Öffnung einen insbesondere rechteckigen Querschnitt aufweisen.

Des Weiteren ist es bevorzugt, dass das Verbindungsteil ein Anlageteil aufweist. In montiertem Zustand liegt das Anlageteil an einer Außenseite des Bodenelements an und verhindert somit insbesondere ein Verkippen des Verbindungsteils.

Das Halteelement ist in besonders bevorzugter Ausführungsform mit dem Lageteil und/oder dem Anlageteil schwenkbar verbunden. Insbesondere kann die schwenkbare Verbindung durch ein Filmgelenk realisiert sein. Besonders bevorzugt ist es, dass das gesamte Verbindungsteil aus einem Kunststoffteil hergestellt ist. Dies ist insbesondere beim Vorsehen von Filmgelenken auf einfache Weise möglich.

Vorzugsweise weist das Anlageteil eine Ausnehmung auf, die vorzugsweise von dem Rahmenteil insbesondere vollständig umgeben ist.

Das Rollelement weist in besonders bevorzugter Weiterbildung ein Fixierteil auf, das vorzugsweise mit dem Verbindungsteil zusammenwirkt. Insbesondere ist es in bevorzugter Weiterbildung möglich, das Fixierteil in die Ausnehmung des Anlageteils des Verbindungsteils einzustecken. Vorzugsweise erfolgt bei einem derartigen Einstecken des Fixierteils in die Ausnehmung des Verbindungsteils ein Verschwenken der Halteelemente. Das Verschwenken erfolgt hierbei derart, dass die Halteelemente von außen gesehen hinter das Bodenelement des Fahrradtransportbehälters verschwenkt werden und sodann auf der Innenseite des Bodenelements anliegen bzw. das Bodenelement hintergreifen.

Das Fixierteil weist in bevorzugter Weiterbildung ein Basisteil auf, das in montiertem Zustand an einer Außenseite des Anlageteils des Verbindungsteils anliegt. Insbesondere wird das Fixierteil zur Montage derart in die Ausnehmung des Anlageteils eingesteckt, bis das Basisteil an der Außenseite des Anlageteils anliegt. Vorzugsweise weist das Basisteil und/oder das Anlageteil Verbindungszapfen auf, die in montiertem Zustand in Verbindungsöffnungen eingreifen. Hierbei kann insbesondere ein Verrasten oder dergleichen erfolgen. Insbesondere durch das Einstecken des Fixierteils in die Ausnehmung des Verbindungsteils erfolgt somit ein festes Verbinden der beiden Teile über die Verbindungszapfen, die in Verbindungsöffnungen eingreifen.

Vorzugsweise weist das Fixierteil ein mit dem Basisteil verbundenes Einsteckteil auf. Bei diesem Teil handelt es sich um das Teil des Fixierteils, das in die Ausnehmung des Anlageteils des Verbindungsteils zur Montage eingesteckt wird. Hierbei entsprechen die Außenabmessungen des Einsteckteils im Wesentlichen den Innenabmessungen der Ausnehmung im Anlageteil.

Zur Verbindung der Rolle mit dem Rollelement ist es bevorzugt, dass das Fixierteil eine Aufnahme für eine Rolle aufweist. Bei der Aufnahme kann es sich um eine insbesondere kreiszylindrische Öffnung handeln, in die ein Zapfen einer Rolle eingesteckt werden kann. Der Zapfen der Rolle dient hierbei vorzugsweise als Schwenkachse der Rolle. Ebenso kann als Aufnahme an dem Fixierteil ein Pin oder Stift vorgesehen sein, auf den eine Rolle bzw. eine Aufnahmeöffnung einer Rolle aufgesteckt wird.

Des Weiteren betrifft die Erfindung ein Rollelement für einen Fahrradtransportbehälter. Das erfindungsgemäße Rollelement weist ein Verbindungsteil und ein Fixierteil auf. Das Verbindungsteil ist derart ausgebildet, dass es in montiertem Zustand ein Bodenelement des Fahrradtransportbehälters hintergreift bzw. an einer Innenseite des Bodenelements anliegt. Das Fixierteil wirkt mit dem Verbindungsteil zusammen.

Die einzelnen Teile des erfindungsgemäßen Rollelements, insbesondere das Verbindungsteil und das Fixierteil sind, wie vorstehend anhand des Fahrradtransportbehälters mit mindestens einem Rollelement beschrieben, vorteilhaft weitergebildet.

Nachfolgend wird die Erfindung anhand einer bevorzugten Ausführungsform unter Bezugnahme auf die anliegenden Zeichnungen näher erläutert.

Es zeigen:
- Fig. 1: eine schematische Seitenansicht des Verbindungsteils,
- Fig. 2: eine schematische Seitenansicht des Verbindungsteils in Richtung des Pfeils II in Fig. 1,
- Fig. 3: eine schematische Draufsicht des Verbindungsteils,
- Fig. 4: eine schematische perspektivische Ansicht des Verbindungsteils,
- Fig. 5: eine schematische Seitenansicht des Fixierteils,
- Fig. 6: eine schematische Seitenansicht des Fixierteils in Richtung des Pfeils IV in Fig. 5,
- Fig. 7: eine schematische Draufsicht des Fixierteils,
- Fig. 8: eine schematische perspektivische Ansicht des Fixierteils,
- Fig. 9: eine schematische Seitenansicht unterschiedlicher Schritte der Montage des Rollelements, und
- Fig. 10: eine schematische perspektivische Ansicht eines Ausschnitts eines Fahrradtransportbehälters mit montierten Rollelementen.

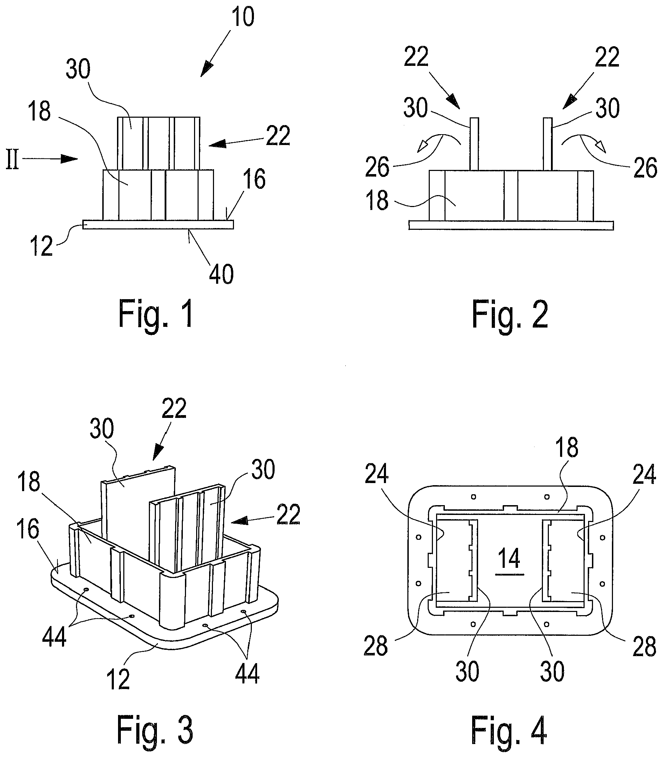

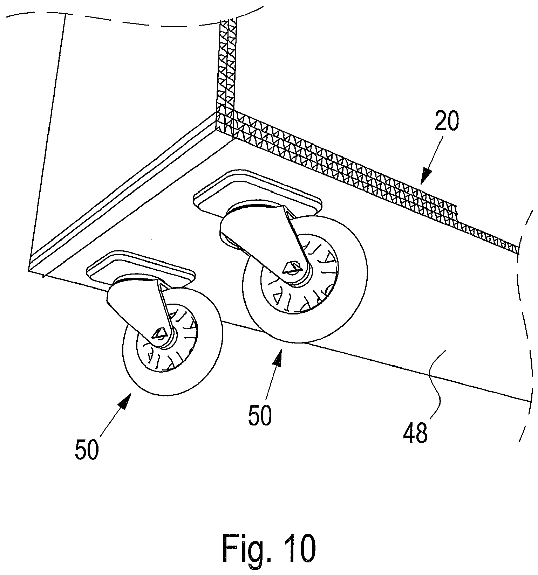

Das in den Figuren 1-4 dargestellte Verbindungsteil 10 weist ein Anlageteil 12 auf. Das Anlageteil 12 ist ein im Wesentlichen ebenes Teil, das rahmenförmig ausgebildet ist und eine Ausnehmung 14 (Fig. 3) umgibt. An einer Oberseite 16 des Anlageteils ist ein Lageteil 18 angeordnet. Das Lageteil 18 umgibt im dargestellten Ausführungsbeispiel die in Draufsicht rechteckige Ausnehmung 14 vollständig. Das Lageteil 18 weist eine Höhe (Fig. 1 und 2) auf, die der Dicke eines Bodenelements 20 (Fig. 10) entspricht.

Ferner weist das Verbindungsteil 10 im dargestellten Ausführungsbeispiel zwei Halteelemente 22 auf. Die Halteelemente 22 sind jeweils über Filmgelenke 24 (Fig. 3) mit dem Anlageteil 12 verbunden. Aufgrund der Filmgelenke 24 können die beiden Halteelemente 22 in Richtung jeweils eines Pfeils 26 (Fig. 2) verschwenkt werden. Um ein entsprechendes Verschwenken zu ermöglichen, sind die beiden Halteelemente 22 im Querschnitt L-förmig ausgebildet und weisen jeweils ein Innenteil 28 und ein rechtwinklig mit dem Innenteil 28 fest verbundenes Außenteil 30 auf. Das Innenteil 28 ist über das Filmgelenk 24 schwenkbar mit dem Anlageteil 12 verbunden. Das Innenteil 28 weist eine Breite auf, die der Höhe des Lageteils 18 entspricht. Hierdurch ist es möglich, die Halteelemente 22 derart zu verschwenken, dass die Innenteile 28 an einer Innenseite des Lageteils 18 anliegen und die Außenteile 30 der Halteelemente 22 auf einer Innenseite 32 des Bodenelements 20 (Fig. 10) anliegen.

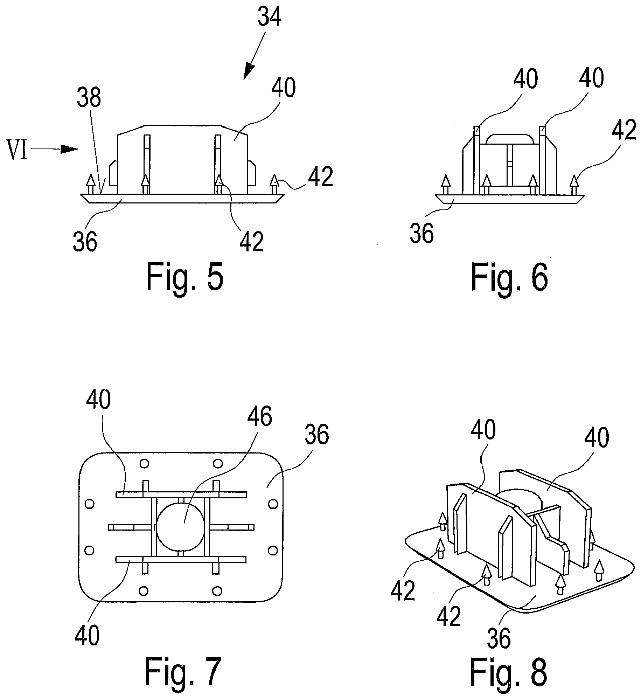

Das in den Figuren 5-8 dargestellte Fixierteil 34 weist ein insbesondere plattenförmiges Basisteil 36 auf. An einer Oberseite 38 des Basisteils 36 ist ein Einsteckteil 40 vorgesehen. Zur Montage wird das Einsteckteil 40 in die Ausnehmung 14 des Verbindungsteils 10 eingesteckt (Fig. 10). Die Oberseite 38 liegt in montiertem Zustand (Fig. 10) an einer Außenseite 40 (Fig. 1) des Verbindungsteils 10 an. Zur besseren Verbindung des Fixierteils 34 mit dem Verbindungsteil 10 sind an der Oberseite 38 stiftförmige Ansätze 42 vorgesehen, die in montiertem Zustand in Öffnungen 44 (Fig. 4) eingreifen und aufgrund der pfeilförmigen Ausgestaltung in diesen einrasten.

Des Weiteren weist das Fixierteil 34 eine zentrale Aufnahme 46 auf, die im dargestellten Ausführungsbeispiel als Öffnung ausgebildet ist. In die zylindrische Öffnung 46 wird ein stiftförmiger Ansatz einer Rolle zur Fixierung eingesteckt.

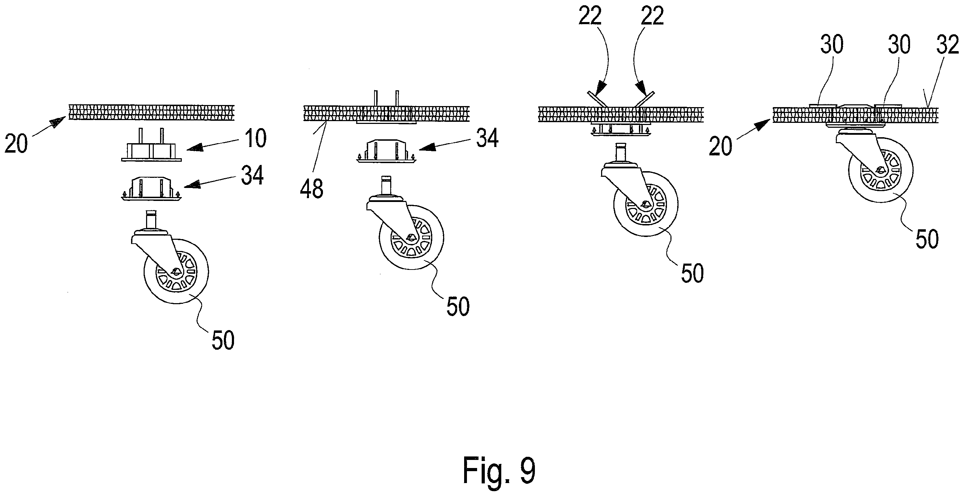

Die Montage ist schematisch aus Fig. 9 ersichtlich. Zunächst wird in einem Bodenelement 20 eines Fahrradtransportbehälters, der insbesondere aus Karton hergestellt ist, eine rechteckige Öffnung vorgesehen. Diese kann ausgeschnitten, ausgestanzt oder bereits vorperforiert sein. Die im Querschnitt rechteckige Öffnung in dem Bodenelement 20 weist eine Außenabmessung auf, die der Außenabmessung des Lageteils 18 entspricht, wobei die Öffnung ggf. etwas kleiner ist, so dass eine gewisse Reibung beim Einschieben und bereits ein erstes Fixieren erfolgt.

In die in dem Bodenelement 20 vorgesehene Öffnung wird in einem nächsten Schritt das Verbindungsteil 10 von einer Außenseite 48 in die Öffnung eingesteckt. Anschließend erfolgt ein Einstecken des Fixierteils 34 bzw. des Einsteckteils 40 des Fixierteils 34 in die Ausnehmung 14 des Verbindungsteils ebenfalls von außen, bezogen auf den Fahrradtransportbehälter. Durch das Einstecken des Einsteckteils 40 in die Ausnehmung 14 werden die beiden Halteelemente 22 des Verbindungsteils 10 nach außen geklappt, bis die Außenteile 30 der Halteelemente 22 auf der Innenseite 32 des Bodenelements 20 anliegen. Gleichzeitig erfolgt ein Einrasten der Verbindungszapfen 42 des Fixierteils 34 in den Verbindungsöffnungen 44 des Verbindungsteils 10.

Somit sind das Verbindungsteil und das Fixierteil des Rollelements fest mit dem Bodenelement 20 des Fahrradtransportbehälters verbunden.

Es ist nunmehr auf einfache Weise möglich, einen Zapfen einer Rolle 50 (Fig. 10) in die Ausnehmung 46 einzustecken. Diese umfasst vorzugsweise Rastelemente, Ringe und dergleichen, kann jedoch auch wieder herausgezogen werden. In montiertem Zustand sind somit die Rollen 50, wie in Fig. 10 dargestellt, an der Außenseite 48 des Bodenelements 20 des Fahrradtransportbehälters angeordnet.

## Patentansprüche

1. Fahrradtransportbehälter mit
einem insbesondere quaderförmigen Außenbehälter,
innerhalb des Außenbehälters vorgesehenen Halte- und/oder Aufnahmeelementen für Fahrradelemente wie einem Fahrradrahmen, Laufrädern und dergleichen, und
an einem Bodenelement (20) des Außenbehälters angeordneten Rollelementen (10, 34, 50).

2. Fahrradtransportbehälter nach Anspruch 1, **dadurch gekennzeichnet, dass** das Bodenelement (20) eine Öffnung zur Aufnahme eines Rollelements (10, 34, 50) aufweist.

3. Fahrradtransportbehälter nach Anspruch 2, **dadurch gekennzeichnet, dass** das Rollelement ein Verbindungsteil (10) aufweist, das das Bodenelement (20) teilweise hintergreift.

4. Fahrradtransportbehälter nach Anspruch 3, **dadurch gekennzeichnet, dass** das Verbindungsteil (10) schwenkbare Halteelemente (22) aufweist, die in verschwenktem Zustand das Bodenelement (20) hintergreifen.

5. Fahrradtransportbehälter nach Anspruch 3 oder 4, **dadurch gekennzeichnet, dass** das Verbindungsteil (10) ein insbesondere rahmenförmig ausgebildetes Lageteil (18) aufweist, das im Wesentlichen in der Öffnung des Bodenelements (20) angeordnet ist.

6. Fahrradtransportbehälter nach einem der Ansprüche 3-5, **dadurch gekennzeichnet, dass** das Verbindungsteil (10) ein Anlageteil (12) aufweist, das an einer Außenseite (48) anliegt.

7. Fahrradtransportbehälter nach einem der Ansprüche 4-6, **dadurch gekennzeichnet, dass** die Halteelemente (22) mit dem Lageteil (18) und/- oder dem Anlageteil (12) schwenkbar verbunden sind.

8. Fahrradtransportbehälter nach Anspruch 6 oder 7, **dadurch gekennzeichnet, dass** das Anlageteil (12) eine Ausnehmung (14) aufweist, die vorzugsweise von dem Lageteil (18) umgeben ist.

9. Fahrradtransportbehälter nach einem der Ansprüche 1-8, **dadurch gekennzeichnet, dass** das Rollelement ein Fixierteil (34) aufweist, das vorzugsweise mit dem Verbindungsteil (10) zusammenwirkt.

10. Fahrradtransportbehälter nach Anspruch 9, **dadurch gekennzeichnet, dass** das Fixierteil (34) in die Ausnehmung (14) des Anlageteils (12) eingesteckt ist, wobei das Fixierteil (34) hierzu vorzugsweise ein Einsteckteil (40) aufweist.

11. Fahrradtransportbehälter nach Anspruch 10, **dadurch gekennzeichnet, dass** das Fixierteil (34) beim Einstecken in die Ausnehmung (14) ein Verschwenken der Halteelemente (22) bewirkt.

12. Fahrradtransportbehälter nach einem der Ansprüche 9-11, **dadurch gekennzeichnet, dass** das Fixierteil (34) ein Basisteil (36) aufweist, das an einer Außenseite (48) des Anlageteils (12) anliegt.

13. Fahrradtransportbehälter nach Anspruch 12, **dadurch gekennzeichnet, dass** das Basisteil (36) und/oder das Anlageteil (12) Verbindungszapfen (42) aufweist, die in Verbindungsöffnungen (44) eingreifen.

14. Fahrradtransportbehälter nach einem der Ansprüche 9-13, **dadurch gekennzeichnet, dass** das Fixierteil (34) eine Aufnahme (46) für eine Rolle aufweist.

15. Rollelemente für Fahrradtransportbehälter mit
einem Verbindungsteil (10), das in montiertem Zustand ein Bodenteil (20) des Fahrradtransportbehälters teilweise hintergreift, und
einem Fixierteil (34), das zur Verbindung mit dem Verbindungsteil (10) in eine Ausnehmung (14) des Verbindungsteils einsteckbar ist.
